# EUROPÄISCHE PATENTANMELDUNG

(11) **EP 1 059 275 A1**
(43) Veröffentlichungstag der Anmeldung: **13.12.2000**
(21) Anmeldenummer: 00810489.5
(22) Anmeldetag: 05.06.2000
(51) Int. Cl.: C06B 33/00, C06B 45/00, C06B 45/04, C06B 45/06, F42D 3/00, G06F 1/00, G08B 13/00, G11B 5/62, G11B 7/24, G11B 23/28, H05K 1/00

(54) **Pyrotechnische Schicht zur gezielten Zerstörung von maschinenlesbaren Daten auf Datenträgern**

(30) Priorität: 07.06.1999 CH 106599
(71) Anmelder: SM Schweizerische Munitionsunternehmung, 3602 Thun (CH)
(72) Erfinder: Schweizer, Philemon, 3612 Steffisburg (CH); Hug, Carl, Dr. phys., 3672 Oberdiessbach (CH); Karametaxas, Georgio, Dr., 3012 Bern (CH)
(74) Vertreter: Frauenknecht, Alois J.

(57) **Zusammenfassung**

Im Bereich eines Datenträgers (2) z.B. in einem Gehäuse wird eine pyrotechnische Schicht (4) angeordnet, welche eine inerte Einlage besitzt und elektrisch durch Zündkanäle gezündet werden kann, sobald ein Missbrauch der Daten droht. Die pyrotechnische Schicht (4) kann auf einer Thermitmischung mit einem Überschuß an Reduktionsmitteln in einem Metallschaum oder Glasfaservlies basieren mit einer Dicke, die die Balance des Datenträgers nicht beeinträchtigt.

## Beschreibung

Die vorliegende Erfindung bezieht sich auf eine pyrotechnische Schicht zur gezielten Zerstörung von maschinenlesbaren Daten auf Datenträgern, insbesondere auf einer Festspeicherplatte, wobei die pyrotechnische Schicht flächig auf oder in einem einem strukturierten Substrat, im Arbeitsbereich des Datenträgers angeordnet und elektrisch zündbar ist.

Die hohe Speicherdichte heutiger Datenträger beinhaltet die grosse Gefahr eines Datenmissbrauchs, sowohl im persönlichen, wirtschaftlichen als auch im militärischen Bereich. Es stellt sich daher die Aufgabe, dass Daten, bevor sie Unbefugten in die Hände geraten, vollständig zu vernichten sind. Diese Aufgabe ist durch die weltweite Verbreitung von "Compact Discs" (CD-ROM = CD Read Only Memory) und die zunehmende Verbreitung von "Digital Versatile Discs" (DVDs) zu einer technischen Herausforderung geworden, war es doch die Zielsetzung der Schöpfer dieser Generation Datenträger, die Unverletzlichkeit der gespeicherten Daten zu gewährleisten. Die Erfindung bezieht sich ferner auf ein Verfahren zur Herstellung der pyrotechnischen Schicht sowie auf deren Verwendung.

Verschiedenste Versuche CD-ROMs und DVDs rasch und sicher zu vernichten, sind fehlgeschlagen, insbesondere weil durch die heutigen Mittel zur Rekonstruktion von Daten mittels optischen Geräten und Algorithmen, die der Datenverschlüsselung entstammen, nicht vollständig zerstörte Datenstrukturen wieder lesbar sind. Die höchste Daten-Vernichtungsrate, bei geringstem technischen Aufwand, wurde im Labor durch eine thermische Zerstörung der Daten mittels dünner pyrotechnischen Schichten, in Form von Folien erzielt. Ihre physische Zuordnung zu den Datenträgern bereitete aber unerwartete Schwierigkeiten, insbesondere in Bezug auf deren Haftfähigkeit, Schichtdicke, Reaktionsgeschwindigkeit und durch ihr unregelmässiges und oft nicht reproduzierbares Abbrandverhalten.

Aus der GB -A- 2 282 136 ist u.a. eine pyrotechnische Folie bekannt, bei der ein rasch oxidierendes Material beidseitig auf eine strukturierte, als Oxidator wirkende Schicht aufgebracht ist. Nach der Zündung bewirken beide Schichten einen stark exothermen Prozess mit hoher Reaktionsgeschwindigkeit und generieren eine Abbrandtemperatur von mehreren tausend Grad Celsius.

Praktische Versuche haben gezeigt, dass eine derartige Folie, die zur Zündung von Gasgeneratoren und Raketenmotoren entwickelt wurde, zu rasch abbrennt und die Umgebung der Datenträger zu sehr in Mitleidenschaft zieht oder sogar zerstört. Nur schon aus Sicherheitsgründen kommt sie für einen Einsatz mit CD-ROM's, DVD's und CD-RW's (CD ReWriter-Laufwerke) nicht in Frage.

Es ist gelungen dieses Problem grundsätzlich zu lösen, in dem pyrotechnische Schicht in einer Vlies-, Netz-, Noppen- und/oder Wabenstruktur aus inertem Material eingelagert wurde (EP Anmelde-Nr. 98810602.7 vom 29.06.98).

In praxi hat es sich gezeigt, dass diese Schicht zwar eine hohe mechanische Festigkeit erreicht, aber nur mit Schwierigkeiten zu verkleben ist. Die gezielte Wärmeentwicklung und -Ausbreitung ist optimal, da die inerte Struktur eine Art thermischen Puffer bildet und unkontrollierte Energieverluste durch Diffusion verhindert.

Dauerversuche haben gezeigt, dass die Klebeschicht, welche die pyrotechnische Schicht mit dem Polycarbonat der CD-ROM verbindet, vibrations- und -schockempflindlich ist, so dass die Gefahr einer Ablösung besteht.

Es ist daher Aufgabe der vorliegenden Erfindung dieses Problem zu lösen und ohne massgebliche Erhöhung der Schichtdicke eine verbesserte Haftung auf dem Trägermaterial zu erreichen, so dass auch gesicherte CD-ROMs und DVDs in Geräten mit mehrfacher Geschwindigkeit und/oder in mobilen Geräten einsetzbar werden.

Diese Aufgabe wird dadurch gelöst, dass die pyrotechnische Schicht in die Hohlräume eines Metallsubstrats eingelagert ist und dass die Seitenflächen des Metallsubstrats Klebeflächen sind.

Das Metallsubstrat bildet über die gesamte Dicke der pyrotechnischen Schicht ein dreidimensionales Gitter mit ausgezeichneten mechanischen und Klebeeigenschaften. Das Metallsubstrat nimmt - wie die Vlies-, Netz-, Noppen- und/oder Wabenstruktur - an der chemischen Reaktion nicht teil; es wirkt primär als Energiespeicher.

Überraschender Weise haftet die in das Metallsubstrat eingebrachte pyrotechnische Masse in diesem hervorragend, dies ohne weitere Oberflächenbehandlungen etc. Ebenfalls kann das Metallsubstrat problemlos mit anderen Materialien verklebt werden, ohne dass die beim Verkleben der pyrotechnischen Masse aufgetretenen Nachteile entstehen.

In nachfolgenden Ansprüchen sind vorteilhafte Ausgestaltungen des Erfindungsgegenstands beschrieben.

Das Metallsubstrat nach Anspruch 2 ist handelsüblich und weist eine Porosität von 90 % bis 95 % auf, d.h. es ist in der Lage eine grosse pyrotechnische Masse aufzunehmen.

Besonders bewährt hat sich Metallschaum aus Nickel, da er sich auch bei den beim Abbrand entstehenden hohen Temperaturen chemisch inert verhält und daher keine exotherme Wärme entsteht, Anspruch 3.

Die in Anspruch 4 angegebenen Schichtdicken erfüllen die an sie gesetzten Anforderungen und verursachen nur beherrschbare Unwuchten, die sich leicht mit an sich bekannten Mitteln kompensieren lassen.

Das Herstellungsverfahren nach Anspruch 5 trägt der hohen Wärmekapazität des Metallschaums Rechnung und erfährt daher Änderungen im Mischungsverhältnis gegenüber einem Substrat aus einem Glasfasermaterial, vgl. EP Anmelde-Nr. 98810602.7.

Es hat sich gezeigt, dass ein in Handel erhältlicher Nickelschaum von 1,5 mm Dicke auf die gewünschte Schichtdicke von zirka 0,5 mm walzbar ist, ohne dass er seine Aufnahmefähigkeit für die pastöse pyrotechnische Masse verliert, vgl. Anspruch 6.

Obwohl verschiedenste Techniken zum Einbringen der pyrotechnischen Massen denkbar sind, ist das aus der Drucktechnik notorisch bekannte Siebdruckverfahren besonders günstig, da es eine genaue Positionierung der Masse und damit wenig Abfälle verursacht und auch für einen diskontinuierlichen Chargenbetrieb bei der Aufbereitung der Masse geeignet ist.

In den Ansprüchen 7 bis 10 sind bevorzugte Verwendungen des Erfindungsgenstands aufgeführt.

In zwei Figuren wird die Erfindung näher dargestellt. Es zeigen:
- Fig. 1: eine Schnittdarstellung durch einen Nickelschaum nach erfolgtem Walzen auf die gewünschte Schichtdicke
und
- Fig. 2: den Nickelschaum nach Fig. 1, gefüllt mit einer pyrotechnischen Schicht.

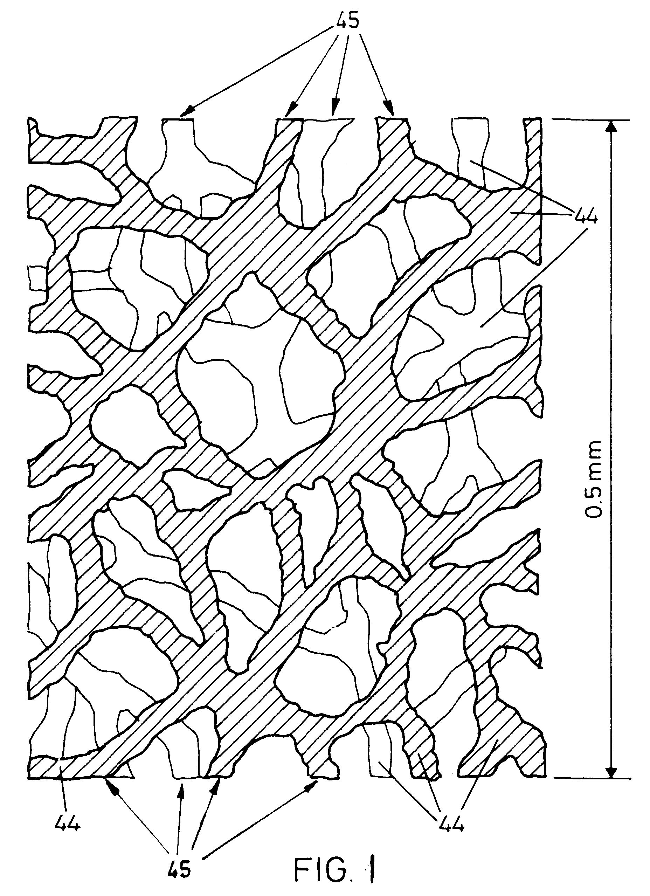

In der Fig. 1 ist ein offenporiger Metallschaum dargestellt, welcher eine Dicke von 0,5 mm aufweist; seine schwammähnliche Struktur ist mit 44 bezeichnet.

Der Metallschaum besteht aus Nickel und ist in einer Dicke von 1,5 mm als flächiges Material, in Form von Bändern, im Handel (International Nickel GmbH, D-40211 Düsseldorf) erhältlich. Durch Kalandrieren (Walzen) wird dieses auf die gewünschte Dicke gebracht; im vorliegenden Fall auf 0,5 mm und anschliessend auf seine Aussenform zugeschnitten.

Die Herstellung der pyrotechnischen Masse erfolgt in konventioneller Technik, wobei hier die gegenüber einem Glasfaservlies (EP Anmelde-Nr. 98810602.7) höhere Wärmekapazität des Metallschaums berücksichtigt ist:

In einem ersten Schritt werden 34,4 Gew.-% Fe₂O₃, 18,6 Gew.-% MnO₂, 14,9 Gew.-% Al und 25,1 Gew.-% Zr miteinander vermengt und dieser Mischung anschliessend 7 Gew.-% polymerer Binder zugesetzt; in einem zweiten Schritt Butylacetat so lange zugegeben bis eine streichfähige Masse entsteht.

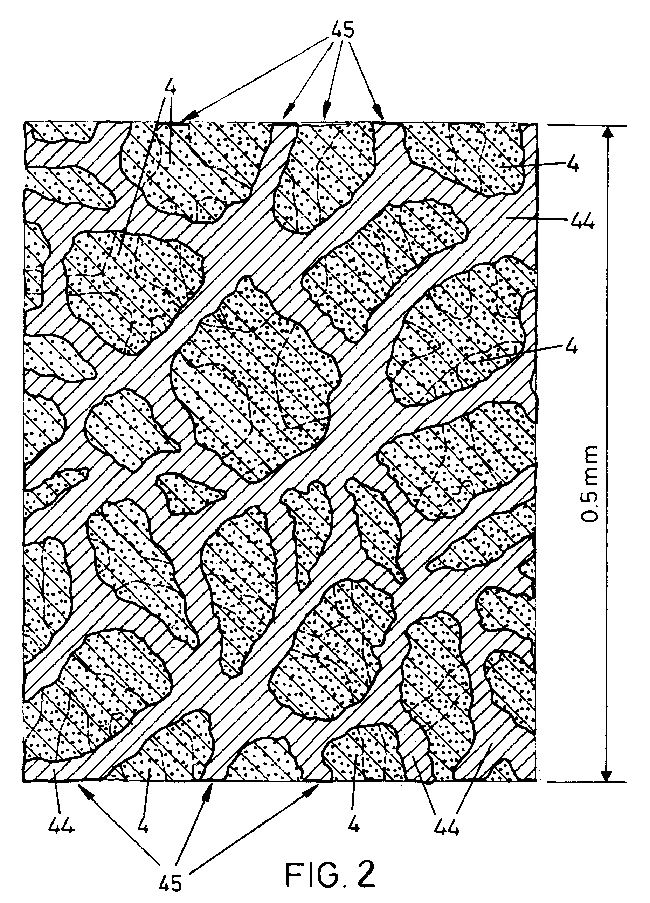

Anschliessend wird diese Masse durch ein notorisch bekanntes Siebdruckverfahren in den Metallschaum Fig. 1 eingebracht und getrocknet; siehe Fig. 2, welche in vergrösserten Draufsicht die montagefertige pyrotechnische Schicht auf einer Stirnseite zeigt.

Aus der Fig. 2 ist ebenfalls ersichtlich, dass die eigentliche Struktur 44 der pyrotechnischen Schicht mit ihren Seitenflächen 45 zur Kontaktstelle und damit zur Klebefläche mit dem Untergrund (CD- ROM, DVD oder CADDY) wird.

Als Kleber hat sich ein üblicher Kontaktkleber bewährt, der aufgesprüht wurde.

Wird diese pyrotechnische Schicht in Verbindung mit DVDs hoher Speicherkapazität (< 8,5 Gbyte) verwendet, empfiehlt es sich diese Schicht zwischen die Layer (beschriebene Reflektoren) zu plazieren, was bei sonst gleichem Aufbau eine Verdickung der DVD um maximal 0,5 mm bedingt.

Aufgrund der planen Oberfläche der Schicht und der Möglichkeit im Siebdruck die pyrotechnische Masse auf einige Zehntelmillimeter genau in den - auch mit Durchlässen versehen - Metallschaum einbringen zu können, lässt sich auch ein sandwichartiger Aufbau präzise realisieren, ohne dass bei der rotierenden Scheibe grössere Unwuchten entstehen.

Selbstverständlich muss die Fokussierung des Lese und/oder Schreibgeräts den gegenüber dem Standard unterschiedlichen Positionen der Layer angepasst werden, bzw. es sind gerätetechnische Änderungen nötig.

Die Initiierung der pyrotechnischen Schicht erfolgt über eine Zündkette mit einem handelsüblichen Glühzünder (elektrische Anzündpille T7 der Fa. Comet GmbH, D-27574 Bremerhaven). Dieser Zünder wirkt auf einen sogenannten Anfeuerungssatz, der in Kanälen eingebracht, auf die Stirnseite der pyrotechnischen Schicht ausgerichtet ist.

Um auch bei DVDs mit hoher Rotationsgeschwindgkeit ein sicheres Anzünden zu gewährleisten, muss der Abstand des Anfeuerungssatzes sehr klein gehalten werden, andernfalls werden die Zündstrahlen an der äusseren Grenzschicht abgelenkt.

Die vorstehend dargestellte pyrotechnische Schicht lässt sich in zahlreiche andere Datenträger und ähnliche Gebilde integrieren und kann leicht auf die spezifischen Bedürfnisse der gewünschten Datenvernichtung angepasst werden.

Ebenfalls sind - je nach Anwendungsgebiet und Stückzahl - andere Verfahren zum Einbringen der pyrotechnischen Masse in den Metallschaum denkbar; erwähnt seien beispielsweise Beschichtungen auf einem Drehteller, Vakuum-Füllverfahren etc.

## Patentansprüche

1. Pyrotechnische Schicht zur gezielten Zerstörung von maschinenlesbaren Daten auf Datenträgern, insbesondere auf einer Festspeicherplatte, wobei die pyrotechnische Schicht flächig auf oder in einem strukturierten Substrat, im Arbeitsbereich des Datenträgers angeordnet und elektrisch zündbar ist, dadurch gekennzeichnet, dass das pyrotechnische Material (4) in die Hohlräume (44) eines Metallsubstrats eingelagert ist und dass die Seitenflächen (45) des Metallsubstrats Klebeflächen sind.

2. Pyrotechnische Schicht nach Anspruch 1, dadurch gekennzeichnet, dass das Metallsubstrat ein offenporiger Metallschaum ist.

3. Pyrotechnische Schicht nach Anspruch 2, dadurch gekennzeichnet, dass der Metallschaum aus Nickel oder einer Nickellegierung besteht.

4. Pyrotechnische Schicht nach Anspruch 1, dadurch gekennzeichnet, dass diese eine Dicke von 0,3 mm bis 0,6 mm aufweist.

5. Verfahren zur Herstellung einer pyrotechnischen Schicht nach Anspruch 1, zur gezielten Zerstörung von maschinenlesbaren Daten auf Datenträgern, insbesondere auf einer Compact Disc, wobei die pyrotechnische Schicht flächig in einem strukturiertem Substrat, im Arbeitsbereich des Datenträgers angeordnet und elektrisch zündbar ist, dadurch gekennzeichnet, dass in einem ersten Verfahrensschritt 34,4 Gew.-% Fe₂O₃, 18,6-% MnO₂, 14,9 Gew.-% Al, 25,1 Gew.-% Zr miteinander vermengt werden und dass dieser Mischung anschliessend 7 Gew.-% polymerer Binder zugesetzt wird, dass in einem zweiten Verfahrensschritt Butylacetat so lange zugegeben wird, bis eine streichfähige Masse entsteht, welche in einem weiteren Verfahrensschritt in die Hohlräume des Metallsubstrats eingefüllt wird und dass diese glattgestrichen, getrocknet und anschliessend aufgeklebt wird.

6. Verfahren nach Anspruch 5, dadurch gekennzeichnet, dass in einer Vorstufe ein vorfabriziertes Metallsubstrat auf die gewünschte Schichtdicke gewalzt wird und dass die pyrotechnische Masse über Siebdruck in das Metallsubstrat eingebracht wird.

7. Verwendung einer pyrotechnischen Schicht nach wenigstens einem der Ansprüche 1 bis 4, im Innern eines Schutzgehäuses eines Datenträgers, insbesondere in einem Caddy oder in einem Wechseldatenträger.

8. Verwendung einer pyrotechnischen Schicht nach wenigstens einem der Ansprüche 1 bis 4, auf der Oberfläche einer Compact Disc.

9. Verwendung einer pyrotechnischen Schicht nach wenigstens einem der Ansprüche 1 bis 4, in einer Zwischenlage einer Compact Disc, insbesondere einer Digital Versatile Disc.

10. Verwendung einer pyrotechnischen Schicht nach wenigstens einem der Ansprüche 1 bis 4, im Gehäuse eines Lesegerätes für Datenträger.
